# NEUE EUROPÄISCHE PATENTSCHRIFT

(11) **EP 0 981 468 B2**
(45) Veröffentlichungstag und Bekanntmachung des Hinweises auf die Entscheidung über den Einspruch: **21.09.2005**
(45) Hinweis auf die Patenterteilung: 31.07.2002
(21) Anmeldenummer: 98929310.5
(22) Anmeldetag: 13.05.1998
(51) Int. Cl.: B60R 21/16, B60R 21/04

(54) **SEITENAUFPRALL-SCHUTZSYSTEM FÜR FAHRZEUGINSASSEN**
PROTECTION SYSTEM AGAINST LATERAL COLLISIONS FOR VEHICLE OCCUPANTS
SYSTEME DE PROTECTION CONTRE LES CHOCS LATERAUX POUR LES OCCUPANTS D'UN VEHICULE

(30) Priorität: 13.05.1997 DE 29708494 U
(43) Veröffentlichungstag der Anmeldung: 01.03.2000
(73) Patentinhaber: TRW Occupant Restraint Systems GmbH & Co. KG, 73551 Alfdorf (DE)
(72) Erfinder: EYRAINER, Heinz, D-73550 Waldstetten (DE)
(74) Vertreter: Degwert, Hartmut
(86) Internationale Anmeldenummer: PCT/EP1998/002839
(87) Internationale Veröffentlichungsnummer: WO 1998/051541

(56) Entgegenhaltungen:
- EP-A- 0 411 979
- EP-A- 0 523 704
- EP-A- 0 590 845
- DE-A- 2 856 437
- DE-A- 4 304 152
- GB-A- 2 220 620
- JP-A- 404 683
- JP-A- 4 046 843

## Beschreibung

Die Erfindung betrifft ein Seitenaufprall-Schutzsystem für Fahrzeuginsassen, mit einem aufblasbaren Schutzkissen, das im Ruhezustand in einer Seitentür oder inneren Seitenstruktur des Fahrzeugs verstaut ist und bei Aktivierung in Richtung des Insassens austritt.

Aufblasbare Schutzkissen zum Schutz vor Verletzungen bei einem Seitenaufprall entfalten sich zwischen dem Fahrzeuginsassen und der seitlichen Begrenzung des Fahrzeuginnenraumes, insbesondere der Fahrzeugtüre. Sie verhindern so einen unmittelbaren Kontakt des Insassen mit Teilen des Fahrzeuges. Aufblasbare Schutzkissen wurden sowohl für den Kopfbereich als auch für den Thorax-Bereich vorgeschlagen. Die funktionsgerechte Entfaltung eines solchen Schutzkissens hängt aber von der Größe, Position und Armstellung des Insassen ab. Bei ungünstiger Sitzposition oder Körperhaltung sind Verletzungen des Insassen durch ein sich plötzlich entfaltendes Thorax-Schutzkissen möglich.

In der deutschen Offenlegungsschrift DE 43 04 152 A1 ist eine Schutzvorrichtung für Fahrzeuginsassen mit Seitenairbags beschrieben, bei der sich ein Airbag im aufgeblasenen Zustand auf der Höhe des Beckenbereichs des Insassen erstreckt und seitlich außen an der Seitentür abgestützt ist. Im Ruhezustand ist der Airbag im Fahrzeugsitz unterhalb der Sitzfläche verstaut und tritt bei einer Aktivierung nach oben gerichtet zwischen Seitentür und Fahrzeuginsasse aus. Sitzt der Fahrzeuginsasse zu dicht an der Seitentüre, kann sich der Airbag zwischen Seitentüre und Fahrzeuginsasse nicht oder nur bis zu einem kleineren Volumen als vorgesehen entfalten, und beim Eindringen der Fahrzeugtüre in den Innenraum des Fahrzeugs aufgrund eines Seitenaufpralls ist keine oder nur eine geringe Schutzwirkung vorhanden.

Durch die Erfindung wird ein Seitenaufprall-Schutzsystem für Fahrzeuginsassen zur Verfügung gestellt, durch das eine Korrektur der Sitzposition im Sinne eines ausreichenden Abstandes von der seitlichen Begrenzung des Fahrzeuginnenraumes erreicht wird. Gemäß der Erfindung erstreckt sich das Schutzkissen im aufgeblasenen Zustand auf der Höhe des Beckenbereiches des Insassen, ist seitlich außen im unteren Bereich der Fahrzeugtüre oder Seitenstruktur abgestützt und weist eine solche Härte auf, daß beim Eindringen der Fahrzeugtüre in den Innenraum des Fahrzeuges aufgrund eines Seitenaufpralls der Insasse auf dem Fahrzeugsitz zum Inneren des Fahrzeuges hin verlagert wird. Durch diese Maßnahme wird eine Reduzierung der Relativgeschwindigkeit zwischen Türe und Insassen im Verlauf des Seitenaufpralls erzielt. Durch die verminderte Relativgeschwindigkeit wird Verletzungen besonders im Thorax-Bereich vorgebeugt. Zudem werden durch das Schutzkissen die von der Seite auf den Insassen einwirkenden Kräfte bedämpft.

Eine verbesserte Schutzwirkung wird gemäß der bevorzugten Ausführungsform erzielt, indem oberhalb des Schutzkissens in die Verkleidung der Fahrzeugtürc oder Seitenstruktur ein Polsterkörper integriert ist, der sich bis auf die Höhe des Thorax-Bereiches des Insassen erstreckt. Zusätzlich ist vorzugsweise ein den Kopfbereich des Insassen abdeckendes aufblasbares Schutzkissen vorgesehen, das an der inneren Seitenstruktur des Fahrzeuges abgestützt ist. Dieses zusätzliche aufblasbare Schutzkissen kann in Verbindung mit dem Schutzkissen im Beckenbereich eine erhöhte Schutzwirkung entfalten.

Das sich auf Höhe des Beckenbereiches des Insassen entfaltende Schutzkissen muß mit einem besondershohen Innendruck aufgeblasen werden, um neben der Bedämpfung des Aufpralls im Abdomenbereich den Insassen zum Inneren des Fahrzeugs hin verschieben zu können. So beträgt der Aufblasdruck für das Schutzkissen im Beckenbereich vorzugsweise etwa 1 bis 1,5 bar. Bei einem solchen Druck ist das Schutzkissen zwar sehr hart, dies ist jedoch unbedenklich, weil es nur auf den Beckenbereich des Insassen einwirkt. In diesem Bereich ist die mechanische Belastbarkeit groß.

Eine erhebliche Steigerung der Schutzwirkung des Seitenaufprall-Schutzsystems wird durch eine Weiterbildung der Erfindung erreicht, bei welcher in Höhe des Thorax-Bereichs des Insassen ein weiteres aufblasbares Schutzkissen vorgesehen ist; dieses ist unter einem Verkleidungsteil der seitlichen Fahrzcugstruktur angeordnet. Bei Aktivierung des Schutzkissens wird das Verkleidungsteil aus der Fahrzeugstruktur herausgelöst und bleibt mit dem Schutzkissen nach Art einer Prallplatte verbunden.

Die Erfindung weist einige besondere Vorteile auf. Dazu gehört die freie Entfaltungsmöglichkeit des Schutzkissens, da im Bereich zwischen Becken und Türe keine Störkonturen wie z.B. Insassenarme, Sitzlehne usw. im Wege sind. Durch das sich aufblasende Schutzkissen ist auch keine Verletzungsgefahr gegeben, da sich der Anschußbereich des Insassen außerhalb des Bereiches seiner Weichteile, insbesondere Rippen und Abdomen, befindet. Durch das Zusammenwirken von Sitzwanne und Schutzkissen erfolgt bei Bedarf eine optimale Korrektur der Sitzposition. Auch die sich bei Entfaltung des Schutzkissens öffnende Abdeckung an der Türverkleidung stellt keine Gefährdung dar, da sie sich außerhalb des möglichen Kontaktbereiches mit dem Insassen unterhalb der Armlehne befindet.

Insbesondere durch die Kombination mit dem Polsterkörper in der Fahrzeugtüre und mit dem Kopf-Schutzkissen ergibt sich ein äußerst wirksames Seitenaufprall-Schutzsystem.

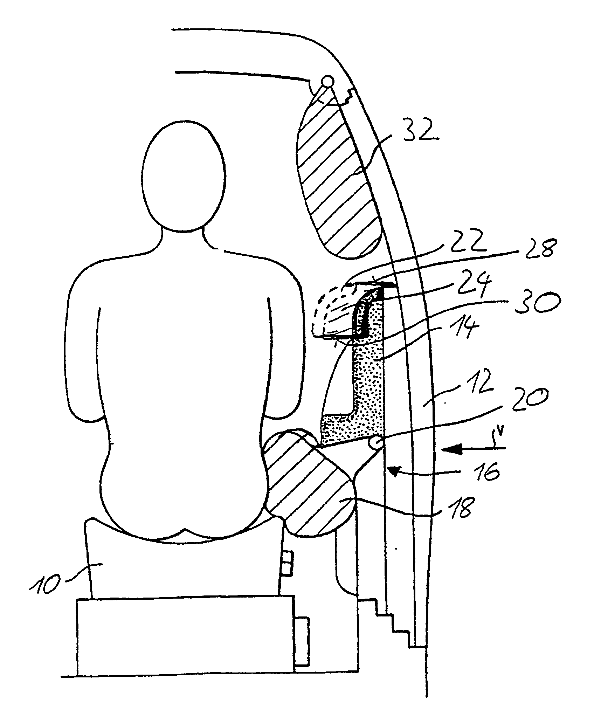

Weitere Besonderheiten der Erfindung ergeben sich aus den Unteransprüchen sowie aus der folgenden Beschreibung einer bevorzugten Ausführungsform unter Bezugnahme auf die Zeichnung, deren einzige Figur schematisch das Seitenaufprall-Schutzsystem im aktivierten Zustand zeigt.

Man erkennt in der Figur den auf einem Fahrzeugsitz 10 sitzenden Insassen neben einer Seitentür 12 des Fahrzeugs. In die innere Türverkleidung ist ein Polsterkörper 14 integriert, der sich von der Türbrüstung bis unter die Höhe der Armlehne erstreckt. Er besteht vorzugsweise aus einer Schaum- oder Wabenstruktur. Unter diesen Prallkörper 14 ist ein Stützgehäusc 16 zur Aufnahme eines Gassacks 18 angeordnet, der durch einen Gasgenerator 20 aufgeblasen werden kann und in der Figur im aufgeblasenen Zustand dargestellt ist. In diesem Zustand erstreckt sich der Gassack 18 auf der Höhe des Beckenbereichs des Insassen.

In den Prallkörper 14 ist ein Verkleidungsteil 22 integriert, das lösbar am Prallkörper befestigt ist und ein darunterliegendes, sehr flach zusammengefaltetes Schutzkissen 24 abdeckt. Das allgemein L-förmig gebogene Verkleidungsteil 22 befindet sich auf der Höhe der Türbrüstung. Das Schutzkissen 24, das in der Figur im aufgeblasenen Zustand gezeigt ist, wird bei der gezeigten Ausführungsform von demselben Gasgenerator 20 befüllt, durch den das Schulzkissen 18 für den Bekkenbereich aufgeblasen wird. Zu diesem Zweck geht von dem Gasgenerator 20 ein Verbindungsrohr aus, das in den Innenraum des Schutzkissens 24 einmündet. Bei Aktivierung des Schutzkissens 24 löst sich zwar das Verkleidungsteil 22 aus dem Prallkörper 14, bleibt jedoch mit diesem durch mehrere flexible Haltebänder28, 30 verbunden. Die Haltebänder 28, 30 haben eine Fesselungs- und Führungsfunktion; sie bewirken annähernd eine Parallelverlagerung des Verkleidungsteils 22 im Verlauf der Ausdehnung des Schutzkissens 24.

Schließlich umfaßt das Schutzsystem ein drittes Schutzkissen 32, das im Ruhezustand über der Dachkante aufgenommen ist und sich im aktivierten Zustand im Kopfbereich des Insassen neben der inneren Seitenstruktur des Fahrzeugs, insbesondere der Seitenscheibe, erstreckt. Dieser Gassack 32 kann separat oder auch durch den gemeinsamen Gasgenerator 20 befüllt werden.

Aus der Figur ist ersichtlich, daß der Insasse durch die vier Komponenten des Schutzsystems, nämlich
- Schutzkissen 18 im Beckenbereich,
- Prallkörper 14 im Thorax-Bereich,
- Schutzkissen 24 mit als Prallplatte wirkendem Verkleidungsteil 22 und
- Schutzkissen 32 für den Kopfschutz
optimal gegen seitliche Einwirkungen geschützt ist. Das Schutzkissen 18 für den Beckenbereich wird auf einen sehr hohen Druck im Bereich von 1 bis 1,5 bar aufgeblasen. Es ist daher in der Lage, die Sitzposition *r* des Insassen, insbesondere im Zusammenwirken mit der Sitzwanne des Fahrzeugsitzes, zu korrigieren. Zwar hat das Schutzkissen 18 bei dem genannten hohen Aufblasdruck eine große Härte, jedoch bleibt seine Einwirkung auf den Beckenbereich des Insassen beschränkt, wo sich keine leicht verletzbaren Körperteile befinden.

Der Prallkörper 14 bedämpft im Bereich zwischen Türbrüstung und Armlehne die im Thorax-Bereich auf den Insassen seitlich einwirkenden Kräfte. Kraftspitzen werden durch Dissipation im Prallkörper 14 abgebaut. Ergänzend hält das Schutzkissen 24 mit dem als Prallplatte wirkenden Verkleidungsteil 22 den oberen Thorax-Bereich des Insassen auf Abstand von der Innenseite der Fahrzeuglür 12. Das Schutzkissen 24 hat eine geringe Entfaltungstiefe und kann sehr schnell entfaltet werden. Über das Verkleidungsteil 22 ergibt sich eine großflächige Krafteinleitung vom Insassen in das Schutzkissen 24.

Das Schutzkissen 32 für den Kopfbereich erstreckt sich fast bis auf die Höhe der Türbrüstung. Der seitliche Insassenschutz ist somit lückenlos zwischen Kopf und Beckenbereich und gewährleistet so einen optimalen Schutz.

## Patentansprüche

1. Seitenaufprall-Schutzsystem für Fahrzeuginsassen mit einem aufblasbaren Schutzkissen (18), das sich im aufgeblasenen Zustand auf der Höhe des Beckenbereiches des Insassen und nicht bis zu dessen Brustbereich erstreckt und seitlich außen an einer Seitentür (12) bzw. der inneren Seitenstruktur des Fahrzeugs abgestützt ist, **dadurch gekennzeichnet, daß** das Schutzkissen (18) im Ruhezustand in der Seitentür (12) oder der inneren Seitenstruktur des Fahrzeugs verstaut ist, bei Aktivierung in Richtung des Insassen austritt und eine solche Härte aufweist, daß beim Eindringen der Fahrzeugtüre in den Innenraum des Fahrzeuges aufgrund eines Seitenaufpralls der Insasse auf dem Fahrzeugsitz zum Inneren des Fahrzeugs hin verlagert wird.

2. Seitenaufprall-Schutzsystem nach Anspruch 1, **dadurch gekennzeichnet, daß** oberhalb des Schutzkissens (18) in die Verkleidung der Fahrzeugtür (12) bzw. Seitenstruktur ein Polsterkörper (14) integriert ist, der sich bis auf die Höhe des Thorax-Bereiches des Insassen erstreckt.

3. Seitenaufprall-Schutzsystem nach Anspruch 1 oder 2, **dadurch gekennzeichnet, daß** zusätzlich ein den Kopfbereich des Insassen abdeckendes aufblasbares Schutzkissen (32) vorgesehen ist, das an einer inneren Seitenstruktur des Fahrzeugs abgestützt ist.

4. Seitenaufprall-Schutzsystem nach einem der vorstehenden Ansprüche, **dadurch gekennzeichnet, daß** in Höhe des Thoraxbereichs des Insassen ein aufblasbares Schutzkissen (24) unter einem Verkleidungsteil (22) der seitlichen Fahrzcugstruktur angeordnet ist.

5. Seitenaufprall-Schutzsystem nach Anspruch 4, **dadurch gekennzeichnet, daß** bei Aktivierung des Schutzkissens (24) das Verkleidungsteil (22) aus der Fahrzeugstruktur herausgelöst wird und mit dem Schutzkissen (24) nach Art einer Prallplatte verbunden bleibt.

6. Seitenaufprall-Schutzsystem nach Anspruch 5, **dadurch gekennzeichnet, daß** das Verkleidungsteil (22) an der Fahrzeugstruktur durch Haltebänder (28, 30) gefesselt und geführt ist.

7. Seitenaufprall-Schutzsystem nach einem der Ansprüche 4 bis 6, **dadurch gekennzeichnet, daß** das Verkleidungsteil (22) eine Türbrüstung bildet.

8. Seitenaufprall-Schutzsystem nach einem der vorstehenden Ansprüche, **dadurch gekennzeichnet, daß** der Aufblasdruck des sich auf der Höhe des Beckenbereichs erstreckenden Schutzkissens (18) etwa 1 bis 1,5 bar beträgt.

9. Seitenaufprall-Schutzsystem nach Anspruch 1 und einem der Ansprüche 3 oder 4, **dadurch gekennzeichnet, daß** wenigstens zwei aufblasbare Schutzkissen (18, 24, 32) durch eine gemeinsame Gasquelle (20) befüllbar sind.

## Claims

1. A side impact protective system for vehicle occupants, comprising an inflatable protective cushion (18) which in the inflated state extends at the level of the pelvic region of the occupant and not as far as to the occupant's chest region and is supported laterally on the exterior on a side door (12) or the inner side structure of the vehicle, **characterized in that** the protective cushion (18) in the state of rest is stowed in the side door (12) or the inner side structure of the vehicle, emerges towards the occupant on activation and has a hardness such that on penetration of the vehicle door into the interior of the vehicle as a result of a side impact, the occupant on the vehicle seat is shifted towards the interior of the vehicle.

2. The side impact protective system according to claim 1, **characterized in that** a padding body (14) is integrated into the covering of the vehicle door (12) or side structure above the protective cushion (18), which padding body (14) extends up to the level of the thorax region of the occupant.

3. The side impact protective system according to claim 1 or 2, **characterized in that** in addition an inflatable protective cushion (32) is provided which covers the head region of the occupant and is supported on an inner side structure of the vehicle.

4. The side impact protective system according to any of the preceding claims, **characterized in that** an inflatable protective cushion (24) is disposed under a covering part (22) of the lateral vehicle structure at the level of the thorax region of the occupant.

5. The side impact protective system according to claim 4, **characterized in that** on activation of the protective cushion (24) the covering part (22) is released out of the vehicle structure and remains connected with the protective cushion (24) like an impact plate.

6. The side impact protective system according to claim 5, **characterized in that** the covering part (22) is tied and guided on the vehicle structure by retaining straps (28, 30).

7. The side impact protective system according to any of claims 4 to 6, **characterized in that** the covering part (22) forms a door rail.

8. The side impact protective system according to any of the preceding claims, **characterized in that** the inflation pressure of the protective cushion (18) extending at the level of the pelvic region amounts to about 1 to 1.5 bar.

9. The side impact protective system according to claim 1 and either of claims 3 or 4, **characterized in that** at least two inflatable protective cushions (18, 24, 32) are able to be filled by a common gas source (20).

## Revendications

1. Système de protection contre les chocs latéraux pour passagers de véhicules, comportant un coussin de protection (18) gonflable qui s'étend, à l'état gonflé, au niveau de la région du bassin du passager et non pas jusqu'à la région de son thorax, et qui prend appui latéralement à l'extérieur sur une portière latérale (12) ou sur la structure latérale intérieure du véhicule, **caractérisé en ce que** le coussin de protection (18) est rangé à l'état de repos dans la portière latérale (12) ou dans la structure latérale intérieure du véhicule, **en ce qu'**il sort en direction du passager, lorsqu'il est activé, et présente une dureté telle que lorsque la portière du véhicule pénètre dans l'espace intérieur du véhicule à la suite d'un choc latéral, le passager sur le siège du véhicule est déporté vers l'intérieur du véhicule.

2. Système de protection contre les chocs latéraux selon la revendication 1, **caractérisé en ce que** dans le revêtement de la portière (12) ou de la structure latérale, au-dessus du coussin de protection (18), est intégré un corps rembourré (14) qui s'étend jusqu'au niveau de la région du thorax du passager.

3. Système de protection contre les chocs latéraux selon la revendication 1 ou 2, **caractérisé en ce qu'**il est prévu additionnellement un coussin de protection (32) gonflable couvrant la région de tête du passager, ledit coussin de protection prenant appui sur la structure latérale intérieure du véhicule.

4. Système de protection contre les chocs latéraux selon l'une quelconque des revendications précédentes, **caractérisé en ce qu'**au niveau de la région du thorax du passager, un coussin de protection (24) gonflable est agencé sous une partie de revêtement (22) de la structure latérale du véhicule.

5. Système de protection contre les chocs latéraux selon la revendication 4, **caractérisé en ce que** lorsque le coussin de protection (24) est activé, la partie de revêtement (22) est détachée de la structure de véhicule et reste reliée au coussin de protection (24) à la manière d'une plaque d'impact.

6. Système de protection contre les chocs latéraux selon la revendication 5, **caractérisé en ce que** la partie de revêtement (22) est attachée et guidée sur la structure de véhicule par des rubans de retenue (28, 30).

7. Système de protection contre les chocs latéraux selon l'une quelconque des revendications 4 à 6, **caractérisé en ce que** la partie de revêtement (22) forme un appui de porte.

8. Système de protection contre les chocs latéraux selon l'une quelconque des revendications précédentes, **caractérisé en ce que** la pression de gonflage du coussin de protection (18) s'étendant au niveau de la région de bassin est d'environ 1 à 1,5 bar.

9. Système de protection contre les chocs latéraux selon la revendication 1 et l'une des revendications 3 ou 4, **caractérisé en ce qu'**au moins deux coussins de protection gonflables (18, 24, 32) peuvent être remplis par une source de gaz (20) commune.
